# EUROPEAN PATENT SPECIFICATION

(11) **EP 1 803 775 B1**
(45) Date of publication and mention of the grant of the patent: **27.04.2011**
(21) Application number: 06025130.3
(22) Date of filing: 05.12.2006
(51) Int. Cl.: C08L 77/00, C08L 77/02, C08L 77/06, C10M 107/38, F16C 33/20, F16H 7/08, F16H 7/18, C08L 27/12

(54) **Sliding member for chain system, chain guide, chain tensioner and chain system**
Gleitkörper für Kettensystem, Kettenführung, Kettenspanner und Kettensystem
Élément coulissant pour système de chaîne, guide de chaîne, tendeur de chaîne et système de chaîne

(30) Priority: 27.12.2005 JP 2005375579
(43) Date of publication of application: 04.07.2007
(73) Proprietor: NISSAN MOTOR CO., LTD., Yokohama-shi, Kanagawa 221-0023 (JP); Asahi Kasei Chemicals Corporation, Tokyo 100-8440 (JP); Hitachi Cable, Ltd., Tokyo 101-8971 (JP)
(72) Inventor: Ota, Tomohito Intellecutal Property Department, Atsugi-shi Kanagawa 243-0192 (JP); Kumagai, Hiroshi Intellecutal Property Department, Atsugi-shi Kanagawa 243-0192 (JP); Taniai, Hiroyuki Intellecutal Property Department, Atsugi-shi Kanagawa 243-0192 (JP); Tamura, Masayuki Intellecutal Property Department, Atsugi-shi Kanagawa 243-0192 (JP); Kusano, Hiroo Hitachi Cable, Ltd., Tokyo 101-8971 (JP); Yamamoto,Yasuaki Hitachi Cable Ltd., Tokyo 101-8971 (JP); Yamaguchi, Sadahiko Asahi Kasei Chemicals Corp., Tokyo 100-8440 (JP)
(74) Representative: Weber, Joachim

(56) References cited:
- DE-A1- 19 545 425
- DE-C1- 19 721 199
- US-A- 3 908 038
- US-A- 4 714 740
- US-A- 4 888 122
- US-A1- 2006 030 500

## Description

### BACKGROUND OF THE INVENTION

This invention relates to improvements in a sliding member for a chain system, a chain guide, a chain tensioner and a chain system, more specifically to a sliding member formed of a resin composition and to be applied to a chain system, and a chain guide, a chain tensioner and a chain system which use the sliding member.

In recent years, applying a thermoplastic resin to a sliding part such as a bearing, a roller, a gear and the like is also progressing from the viewpoint of reducing noise with sliding, lightening weight and providing no lubrication to a sliding section, in which an environment (for example, an applied bearing pressure and a using temperature) where a plastic sliding material is used become increasingly severe.

Particularly a shoe member of a gear, a pulley and a chain guide used in an internal combustion engine of an automotive vehicle are required to have a good sliding characteristics, a good heat resistance at a temperature of not lower than 140 °C and a good oil resistance. Accordingly, in order to form the above-mentioned part of plastic, polyamide resin excellent in heat resistance, oil resistance, mechanical strength and wear resistance are applied to the material of the part. However, polyamide resin has a shortcoming that its frictional resistance is high during sliding.

Besides, in recent years, an improvement in fuel economy or fuel consumption is required in an internal combustion engines form the viewpoint of environmental protection. It is known as a method of reducing a frictional resistance of polyamide resin during sliding, to add into polyamide resin a solid lubricant, for example, fluororesin such as polytetrafluoroethylene, as disclosed in Japanese Patent Provisional Publication No. 2002-53761. Additionally, it is also known as the same method, to add into polyamide resin a solid lubricant such as molybdenum disulfide.

As a measure to improve an impact resistance of the above resin composition, it is general to add into the resin composition a fibrous filler such as glass fiber or the like, or a soft material such as rubber or the like, as disclosed in Japanese Patent Provisional Publication No. 2005-89619.

### SUMMARY OF THE INVENTION

However, in a conventional technique of the above Japanese Patent Provisional Publication No. 2002-53761, in case that the above-mentioned solid lubricant is added to the polyamide resin, the strength and impact resistance of a material is not sufficient. Particularly, an impactive input acts on a part such as a gear, a pulley, a shoe of a chain guide and the like under an actual using condition, so that ensuring a good impact resistance is an important subject from the viewpoint of reliability of the part.

In a conventional technique of the above Japanese Patent Provisional Publication No. 2005-89619, in case that the fibrous filler is added, the fibrous filler dropped from the resin composition stays at a sliding surface during sliding, thereby serving as an abrasive. This provides the following problems: Wear of the resin composition itself is promoted. Additionally, the fibrous filler scattered in a system stays in other sliding sections, thereby promoting wear of other parts. In case that the soft material such as rubber or the like is added, a frictional resistance rises so that the effect obtained by adding the solid lubricant disappears.

In US 4,714,740 there is provided a thermoplastic polybend of nylon 66 and polymethylmethacrylate having superior friction and wear properties. Alternatively, the polybend composition may contain a third component of polytetrafluoroethylene to further improve its friction and wear properties.

It is, therefore, an object of the present invention to provide improved sliding member of a chain system, and improved chain guide, chain tensioner and chain system which use the sliding member, which can effectively overcome drawbacks encountered in conventional sliding members of chain systems, and chain guides, chain tensioners and chain systems which use the sliding members.

Another object of the present invention is to provide improved sliding member of a chain system, and improved chain guide, chain tensioner and chain system which use the sliding member, which have both excellent friction characteristics and wear resistance in presence of a lubricant such as lubricating oil or hydraulic oil.

An aspect of the present invention resides in a sliding member made of a resin composition. The resin composition comprises a matrix resin which is a thermoplastic resin having a number average molecular weight of not less than 20000; and a fluororesin in an amount ranging from 5 to 40 % by mass based on a total amount of the resin composition, the fluororesin having a surface energy ranging from 200 to 400 µN/cm and a visible light transmittance of not less than 10% at a wavelength of 600 nm.

Another aspect of the present invention resides in a sliding member for a chain system, used in the chain system and made of a resin composition. The resin composition comprises a matrix resin which is a thermoplastic resin having a number average molecular weight of not less than 20000; and a fluororesin in an amount ranging from 5 to 40 % by mass based on a total amount of the resin composition, the fluororesin having a surface energy ranging from 200 to 400 µN/cm and a visible light transmittance of not less than 10% at a wavelength of 600 nm.

A further aspect of the present invention resides in a chain guide which comprises a shoe material having a sliding section which is provided with a sliding member for a chain system. The sliding member is used in the chain system and made of a resin composition. The resin composition includes a matrix resin which is a thermoplastic resin having a number average molecular weight of not less than 20000; and a fluororesin in an amount ranging from 5 to 40 % by mass based on a total amount of the resin composition, the fluororesin having a surface energy ranging from 200 to 400 µN/cm and a visible light transmittance of not less than 10% at a wavelength of 600 nm.

A still further aspect of the present invention resides in a chain tensioner which comprises a shoe material having a sliding section which is provided with a sliding member for a chain system. The sliding member is used in the chain system and made of a resin composition. The resin composition includes a matrix resin which is a thermoplastic resin having a number average molecular weight of not less than 20000; and a fluororesin in an amount ranging from 5 to 40 % by mass based on a total amount of the resin composition, the fluororesin having a surface energy ranging from 200 to 400 µN/cm and a visible light transmittance of not less than 10% at a wavelength of 600 nm.

A still further aspect of the present invention resides in a chain system which comprises a sliding member for a chain system, used in the chain system and made of a resin composition, and a chain. The resin composition includes a matrix resin which is a thermoplastic resin having a number average molecular weight of not less than 20000; and a fluororesin in an amount ranging from 5 to 40 % by mass based on a total amount of the resin composition, the fluororesin having a surface energy ranging from 200 to 400 µN/cm and a visible light transmittance of not less than 10% at a wavelength of 600 n, wherein the sliding member and the chain are in slidable contact with each other in presence of a lubricant.

### BRIEF DESCRIPTION OF THE INVENTION

Fig. 1 is a perspective view of a ring specimen used in a friction test;
Fig. 2 is a schematic illustration of a vertical ring-on-disc type friction and wear test apparatus used for the friction test; and
Fig. 3 is a front view of a chain system including an embodiment of a chain tensioner according to the present invention and an embodiment of a chain guide according to the present invention.

### DETAILED DESCRIPTION OF THE INVENTION

According to the present invention, a sliding member for a chain system is used in the chain system and made of a resin composition. The resin composition comprises a matrix resin which is a thermoplastic resin having a number average molecular weight of not less than 20000; and a fluororesin in an amount or content ranging from 5 to 40 % by mass based on a total amount of the resin composition, the fluororesin having a surface energy ranging from 200 to 400 µN/cm and a visible light transmittance of not less than 10% at a wavelength of 600 nm.

Hereinafter, the sliding member for a chain system will be discussed in detail. In the specification and the claims of the present application, "%" represents % by mass unless not specified.

As described above, the sliding member for a chain system is used in a chain system and formed of the resin composition. The resin composition includes a matrix resin and a fluororesin whose content is 5 to 40 % based on the total amount of the resin composition.

The matrix resin is a thermoplastic resin having a number average molecular weight of not less than 20000. The fluororesin has a surface energy ranging from 200 to 400 µN/cm and a visible light transmittance of not less than 10% at a wavelength of 600 nm.

With the thus arranged resin composition, an excellent friction characteristics, particularly a low friction coefficient, and an excellent wear resistance can be exhibited in presence of a lubricant such as lubricating oil and hydraulic fluid. The resin composition can be suitably used in a chain system. Additionally, the friction characteristics can be remarkably improved only by causing a predetermined amount of fluororesin to be contained in the resin composition, thereby providing an advantage that a cost for improving a sliding characteristics is relatively low.

In the sliding member for a chain system, according to the present invention, the matrix resin is required to contain a thermoplastic resin or to be a thermoplastic resin because articles having a complicated shape can be readily formed with the thermoplastic resin, for example, by means of an injection molding from the viewpoint of application of the resin composition to a shoe of a chain guide and a chain tensioner used in a chain system for an automotive internal combustion engine or the like.

Examples of such thermoplastic resin are polyethylene resin, polypropylene resin, polyamide resin, polyphenylene sulfide resin, polyacetal resin, polyester resin, polyether sulfone resin, polyetherether ketone resin, polyether imide resin, polyamide imide resin, polyimide resin. These can be used singly or in combination.

In general, mixing of the matrix resin and the fluororesin is carried out by using a biaxial extruder, in which an extrusion temperature at which extrusion is made is set a level of not lower than a melting point of the matrix resin. As this extrusion temperature is close to the melting point of the fluororesin, the fluororesin tends to easily uniformized with the matrix resin owing to plasticization of the fluororesin. This improves an adherence of the fluororesin with the matrix resin while improving a dispersion characteristics of the fluororesin in the matrix resin. In general, a temperature of not lower than 250 °C is required to promote the plasticization of the fluororesin.

From the viewpoints of improving the adherence with the fluororesin and improving the dispersion characteristics of the fluororesin, it is preferable to use the thermoplastic resin having a melting point of not lower than 250 °C. Additionally, polyamide is preferable as the thermoplastic resin, taking account of a heat resistance, an oil resistance, an impact resistance, and a cost.

In the sliding member for a chain system, according to the present invention, the matrix resin is required to be the thermoplastic resin having a number average molecular weight of not less than 20000. In case of using the thermoplastic resin having the number average molecular weight of less than 20000, the fluororesin serves as a foreign matter since the fluororesin is added into the thermoplastic resin, thereby largely lowering mechanical properties, particularly an impact resistance, of a compound material. As a result, it become impossible to apply the sliding member to a section at which impact is input, which is problematic in practical use.

Thus, the matrix resin is preferably the thermoplastic resin having the number average molecular weight of not less than 25000 from the viewpoint of the fact that increasing the molecular weight of the matrix resin is effective for the purpose of obtaining a sufficient impact strength of the compound material.

In the sliding member for a chain system, according to the present invention, the fluororesin is required to have a surface energy ranging from 200 to 400 µN/cm and a visible light transmittance of not less than 10 % at a wavelength of 600 nm.

In general, lubricating oil or hydraulic fluid has a surface energy around 200 to 350 µN/cm. A general fluororesin applied for friction reduction has a surface energy around 170 to 200 µN/cm. Accordingly, when the general fluororesin is applied under a lubricating condition, it is degraded in compatibility with oil, and therefore a friction reduction effect like that under no lubricating condition cannot be obtained even if the fluororesin is contained.

Consequently, in the present invention, the fluororesin contained in the resin composition is reformed to have a surface energy ranging from 200 to 400 µN/cm, preferably ranging from 250 to 350 µN/cm. As a result, formation of oil film, adsorption of additives in oil and the like cannot be impeded, thereby exhibiting a synergistic effect between oil film and solid lubricant.

Additionally, the fluororesin is weak to friction and therefore is low in wear resistance. If general fluororesin is contained in the resin composition, a section surrounding a site at which fluororesin exists selectively wears, and therefore the wear amount of the whole resin composition tends to increase.

In order to improve the wear resistance of fluororesin, it is effective to reduce a crystal size. By reducing the crystal size, a flowability of a crystal increases so that transferring of fluororesin to an opposite member can become easy, thereby promoting formation of a transferred film of fluororesin thus improving the wear resistance. Additionally, also by the fact that the size of abrasion powder is reduced, the wear resistance can be improved.

The magnitude of the crystal size can be determined by using a visible light transmittance. For example, as described above, a sufficient wear resistance can be obtained by setting the fluororesin to have a visible light transmittance of not less than 10 % at a wavelength of 600 nm.

As discussed above, the (reformed) fluororesin having a surface energy ranging from 200 to 400 µN/cm and a visible light transmittance of not less than 10% at a wavelength of 600 nm can be obtained, for example, by heating a raw material fluororesin at a temperature of not lower than a melting point of the raw material fluororesin in the atmosphere of an inert gas having a oxygen partial pressure of not higher than 1333 Pa and then by irradiating an ionizing radiation in a range of from 1 to 10 kGy, and thereafter by providing a thermal energy onto the raw material fluororesin in presence of oxygen.

The above reformed fluororesin is increased in amount of unsaturated bond as compared with conventional fluororesins. In case that the reformed fluororesin is used in the resin composition, unsaturated bonds in a molecule chain of the fluororesin react with, for example, functional groups of the matrix resin, thereby exhibiting a secondary effect such as improving the adherence between the matrix resin and the fluororesin.

Additionally, it is preferable to use tetrafluoroethylene resin as the fluororesin from the viewpoint of being low in friction.

In the sliding member in a chain system, according to the present invention, the fluororesin is fluororesin particle which has an average particle size preferably ranging from 1 to 50 µm, and more preferably ranging from 1 to 30 µm. If the average particle size is less than 1 µm, it is difficult to disperse the fluororesin in the matrix resin. If the average particle diameter exceeds 50 µm, it serves as coarse particle and may lower a strength, particularly an impact strength and a fatigue strength, of the matrix resin.

Furthermore, in the sliding member in the chain system, according to the present invention, the content of the fluororesin is required to be 5 to 40 % based on the total amount of the resin composition. If the content of the fluororesin is less than 5 %, a sufficient friction reduction effect cannot be obtained. If the content exceeds 40 %, the friction reduction effect saturates even upon the content of the fluororesin increases over 40 % while the mechanical properties of the resin composition unavoidably lowers because the content of the fluororesin lower in mechanical strength increases. From these viewpoints, it is preferable that the content of the fluororesin is 10 to 20 % based on the total amount of the resin composition.

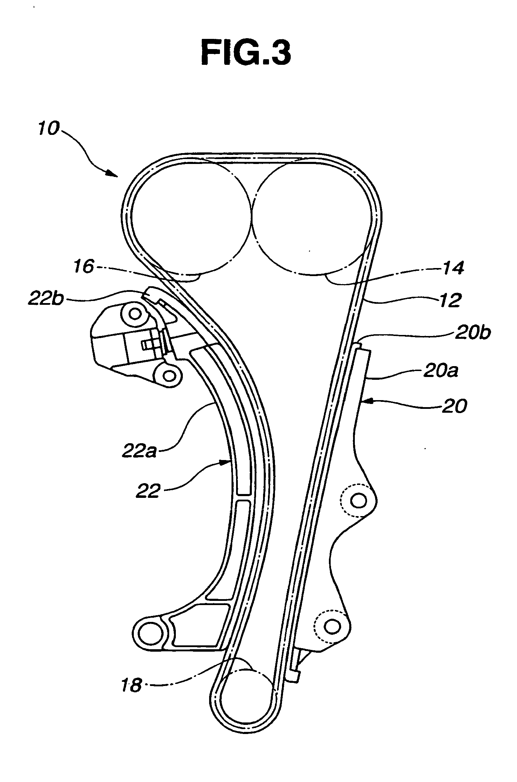

Next, a chain guide and a chain tensioner according to the present invention will be discussed in detail. An example of the chain system is illustrated by the reference numeral 10 in Fig. 3 and includes a chain 12 engagingly passed on gears 14, 16 and 18. The chain tensioner 20 has a main body 20a to which a shoe material 20b is fixedly secured. The shoe material 20b is in press contact with the chain 12. The chain guide 22 has a main body 22a to which a shoe material 22b is fixedly secured. The shoe material 22b is in press contact with the chain 12. The shoe material 20a, 22b of the chain tensioner 20 and the chain guide 22 is provided at its sliding section with the above-mentioned sliding member for the chain system, according to the present invention, in which the sliding section is in direct contact with the chain 12.

As discussed above, the chain guide and the chain tensioner according to the present invention are arranged such that the sliding member for a chain system, according to the present invention is provided to at least the sliding section of a shoe material of the chain guide and the chain tensioner. Such a chain guide and a chain tensioner exhibit both an excellent friction characteristics, particularly a low friction coefficient, and an excellent wear resistance in presence of a lubricant such as lubricating oil or hydraulic fluid, and therefore they are suitably used in the chain system. When the chain guide or the chain tensioner is applied to the chain system of an internal combustion engine of an automotive vehicle, a frictional resistance is lowered thereby making it possible to improve a fuel economy or fuel consumption of the automotive vehicle.

The chain system according to the present invention includes the sliding member for a chain system, according to the present invention, and a chain, in which the sliding member and the chain are in slidable contact with each other in presence of a lubricant such as lubricating oil or hydraulic fluid. With this arrangement, the chain system have both excellent friction characteristics and wear resistance. If the chain system is applied to a chain system of an internal combustion engine of an automotive vehicle, a frictional resistance is lowered thereby improving the fuel economy of the automotive vehicle.

In the present invention, the sliding surface of the chain has a surface roughness (at the maximum roughness or height according to JIS B 0601) of not larger than 5 µm. In case that such a chain is used as the opposite member for the sliding member, the sliding member can more remarkably exhibit its friction reduction effect. If the surface roughness (at the maximum roughness) exceeds 5 µm, the friction reduction effect of the sliding member largely lowers while there is the fear of promoting wear of the sliding member applied to the sliding section of the shoe material.

Although the sliding member according to the present invention is suitable in use for a chain system, particularly a chain guide or a chain tensioner, it can be applied, for example, to a plastic gear, a plastic bearing, a plastic thrust washer and a plastic seal ring.

### EXAMPLES

The present invention will be more readily understood with reference to the following Examples in comparison with Comparative Examples; however, these Examples are intended to illustrate the invention and are not to be construed to limit the scope of the invention.

### EXAMPLE 1

Electron beam (boosted voltage: 2MeV) was irradiated at an irradiated dosage of 100 kGy onto molding powder (available from Asahi Glass Co., Ltd. under the trade name of G163) of tetrafluoroethylene in an atmosphere having an oxygen partial pressure of 133 Pa and a nitrogen partial pressure of 106657 Pa under a heating condition of 350 °C, thereby reforming the molding powder of tetrafluoroethylene. Thereafter, the reformed molding powder was pulverized by a jet mill to have an average particle size of 25 µm, thereby obtaining a reformed tetrafluoroethylene powder.

Subsequently, the above reformed tetrafluoroethylene powder in an amount of 20 parts by weight was mixed with 80 parts by weight of a PA (polyamide) 66 resin (available from Asahi Kasei Chemicals Corporation under the trade name of Leona 1402) having a number average molecular weight of 20000 so as to form a mixture. The mixture was cast through a feed hopper into a biaxial extruder thereby to accomplish pelletization so as to produce pellets, in which the setting temperature of the biaxial extruder was 290 °C, and the rotational speed of screws was 300 r.p.m. The pellets formed by the biaxial extruder was subjected to injection molding under a condition where the temperature of a cylinder was 290 °C; the temperature of a metal mold was 80 °C; and the injection speed was 150 mm/sec., thereby obtaining a sliding member (specimen) of this Example.

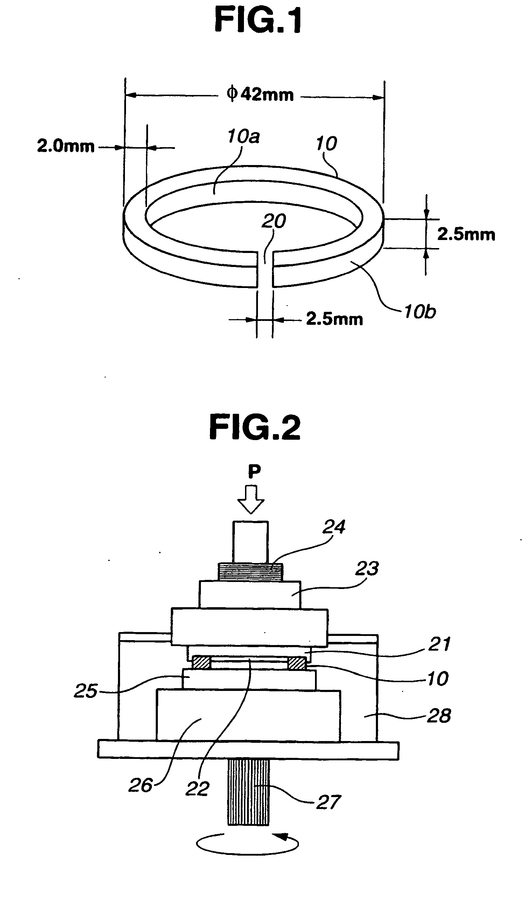

As the specimens, a ring specimen 10 shown in Fig. 1 and a flat plate specimen (not shown) were produced. The ring specimen was for a friction test and has dimensions shown in Fig. 1, and was formed with a slit 20 having a width of 2.5 mm. The flat plate specimen was for an impact test and having a size of 80 mm x 10 mm x 4 mm.

The thus obtained sliding members (specimens) were confirmed to have a surface energy of the fluororesin, of 280 µN/cm upon a contact angle measurement of pure water and methylene iodide. Additionally, they were confirmed to have a visible light transmittance of the fluororesin, of 24 % at a wavelength of 600 nm by a method under provision of JIS K 7361.

### EXAMPLE 2

The reformed tetrafluoroethylene powder of Example 1 in an amount of 20 parts by weight was mixed with 80 parts by weight of a PA (polyamide) 66 resin (available from Asahi Kasei Chemicals Corporation under the trade name of Leona 1402) having a number average molecular weight of 20000 so as to form a mixture. The mixture was cast through a feed hopper into a biaxial extruder thereby to accomplish pelletization so as to produce pellets, in which the setting temperature of the biaxial extruder was 290 °C, and the rotational speed of screws was 300 r.p.m.

Subsequently, the pellets formed by the biaxial extruder was subjected to injection molding under the same condition as in Example 1, thereby obtaining a sliding member (specimen) of this Example.

### COMPARATIVE EXAMPLE 1

A procedure of Example 1 was repeated with the exception that PA (polyamide) 66 resin (available from Asahi Kasei Chemicals Corporation under the trade name of 1202) having a number average molecular weight of 17000 was used in place of the PA (polyamide) 66 resin (available from Asahi Kasei Chemicals Corporation under the trade name of Leona 1402) having a number average molecular weight of 20000, thereby obtaining a sliding member (specimen) of this Comparative Example.

### COMPARATIVE EXAMPLE 2

A procedure of Example 1 was repeated with the exception that the above reformed tetrafluoroethylene powder in an amount of 50 parts by weight was mixed with 50 parts by weight of a PA (polyamide) 66 resin (available from Asahi Kasei Chemicals Corporation under the trade name of Leona 1402) having a number average molecular weight of 20000 so as to form a mixture, thereby obtaining a sliding member (specimen) of this Comparative Example.

### COMPARATIVE EXAMPLE 3

A procedure of Example 1 was repeated with the exception that 20 parts by weight of a molding powder (available from Asahi Glass Co., Ltd. under the trade name of G163) of tetrafluoroethylene having an average particle size of 25 µm was mixed with 80 parts by weight of a PA (polyamide) 66 resin (available from Asahi Kasei Chemicals Corporation under the trade name of Leona 1402) having a number average molecular weight of 20000 so as to form a mixture, thereby obtaining a sliding member (specimen) of this Comparative Example.

### COMPARATIVE EXAMPLE 4

A PA (polyamide) 66 resin (available from Asahi Kasei Chemicals Corporation under the trade name of Leona 1402) having a number average molecular weight of 20000 was subject to injection molding under the same condition as in Example 1, thereby obtaining a sliding member (specimen) of this Comparative Example.

### EVALUATION TEST

### [Friction Test]

The ring specimen of each Example or each Comparative Example was subjected to a friction test in an engine oil (a genuine engine oil "SL Strong Save 5W-30" of Nissan Motor Co. Ltd.). A general carbon steel (heat-treated "S55C" having a Rockwell hardness (A-scale) of 70) was used as an opposite material which is in slidable contact with the ring specimen, in which the S55C was according to JIS G 4051. In order to install to a test apparatus (friction and wear test apparatus), the carbon steel was formed into a disc-like shape and had a diameter of 60 mm and a thickness of 10 mm, thereby producing a carbon steel disc (test piece). The carbon steel disc had a sliding surface having a surface roughness (at the maximum roughness) of 5 µm.

Here, the friction and wear test apparatus of the vertical ring-on-disc type is explained using the drawing. As shown in Fig. 2, this test apparatus has at its upper section a ring holder 21, a torque detector 23, and a load cell 24. The ring holder 21 is constructed such that the outer peripheral surface 10b (in Fig. 1) of the ring specimen 10 is pushed and fixed to an peripheral portion defining a holder groove under the biasing force of a snap ring 22 disposed at the side of the inner peripheral surface 10a (in Fig. 1) of the ring specimen 10, so that the ring specimen 10 cannot radially move.

The test apparatus has at its low section a disc holder connected to a rotating shaft 27. When the carbon steel disc 25 is fixed to the disc holder 26 with bolts, the carbon steel disc 25 is rotatable relative to the ring specimen 10. Subsequently, the ring holder 21 is moved down to make a slidable relationship between the ring specimen 10 and the carbon steel disc 25, and then a pressure P is applied axially and vertically as shown in Fig. 2 so that the ring specimen 10 is brought into press contact with the disc 25. At this time, the sliding sections of the ring specimen 10 and the carbon steel disc 25 are dipped in the engine oil (genuine engine oil "SL Strong Save 5W-30" of Nissan Motor Co. Ltd.) 28.

Using the above test apparatus, a friction test was carried out under a condition in which a press-contact bearing pressure between the ring specimen and the carbon steel disc was 2MPa, a friction speed was 7 m/sec., and a test time was 6 hours. During the friction test, an average friction coefficient of the ring specimen was measured. Additionally, after the friction test, an abrasion depth (µm) of the ring specimen was measured. Results of the friction test were shown in Table 1.

### [Impact Test]

The flat plate specimen of each Example or each Comparative Example was subjected to an Izod impact test to measure an Izod impact value (kJ/m²) at -30 °C so as to compare impact resistances of the Examples and Comparative Examples, under a condition in which a test temperature was -30°C; and the flat plate specimen was not formed with a notch. Results of this test were shown in Table 1 in which "NB" indicates a result in which no breakage occurred.

**Table 1**

| Specimen | Example 1 | Example 2 | Comparative Example 1 | Comparative Example 2 | Comparative Example 3 | Comparative Example 4 |
|---|---|---|---|---|---|---|
| Average friction coefficient | 0.046 | 0.048 | 0.052 | 0.049 | 0.073 | 0.069 |
| Abrasion depth (µm) | 13 | 8 | 16 | 7 | 22 | 38 |
| Izod impact value (kJ/m²) | 67 | 84 | 52 | 40 | 63 | NB |

On comparison of the average friction coefficients, in case that the fluororesin has a surface energy ranging from 200 to 400 µN/cm, and a visible light transmittance of not lower than 10 % at a wavelength of 600 nm, i.e., in Example 1 and 2 and Comparative Examples 1 and 2, the average friction coefficient takes a value around 0.05. In contrast, in case that general tetrafluoroethylene is added to a PA 66 resin, i.e., in Comparative Example, or in case of only a PA 66 resin, i.e., in Comparative Example 4, the average friction coefficient is around 0.07. Thus, it will be understood that a friction reduction of not lower than 20 % can be achieved by adding the above-mentioned fluororesin to a PA66 resin.

Additionally, the frictions in Comparative Example 3 and Comparative Example 4 are generally equal. This is assumed to result from the following facts: Usual fluororesin is low in surface energy and therefore impedes the wettability with the lubricating oil. Besides, usual fluororesin is large in crystal size, and therefore the wear resistance of the fluororesin transferred film formed at the surface of the carbon steel disc (made of S55C) as the opposite member is low so that the transferred film unavoidably wears.

On comparison of the abrasion depths of the ring specimens after the friction test, in case that the fluororesin has a surface energy of the fluororesin ranging from 200 to 400 µN/cm, and a visible light transmittance of not lower than 10 % at a wavelength of 600 nm, i.e., in Example 1 and 2 and Comparative Examples 1 and 2, the abrasion of the ring specimens is suppressed as compared with that in Comparative Examples 3 and 4 as will be understood.

Particularly, in Example 2 in which the molecular weight of a PA 66 resin is highly increased, and in Comparative Example 2 in which the added amount of the fluororesin increases, the abrasion depth of the ring specimen is not larger than 10 µm, so that a wear resistance improving effect can be remarkable.

On comparison of Izod impact values, in case that the matrix resin has a number average molecular weight of not lower than 20000, and the added amount of the fluororesin is not larger than 40 %, i.e., in Examples 1 and 2 and Comparative Example 3, an Izod impact value of 60 kJ/m² is ensured. In contrast, in case that the matrix resin has a number average molecular weight of not larger than 20000, i.e., in Comparative Example 1, and in case that the added amount of the fluororesin exceeds 40 %, i.e., in Example 2, the Izod impact values lowers to around 50 kJ/m² as will be understood from the test results.

In parts of an automotive internal combustion engine, to which impact input is applied, it is required to ensure an initial Izod impact value (in a specimen without a notch) of not lower than 50 kJ/m² from the viewpoint of ensuring the reliability of the parts. Accordingly, it will be understood that it is difficult to employ the specimens of Comparative Examples 1 and 2 as the materials for the parts, from the viewpoint of the impact resistance.

It will be appreciated from the above test results of the friction test and the impact test, that only Examples 1 and 2 can realize both a low friction coefficient and an excellent impact resistance which is not problematic in practical use.

According to the present invention, a specified fluororesin is added in a specified amount to a specified matrix resin, thereby providing a sliding member for a chain system, used in the chain system, and a chain guide, a chain tensioner and a chain system which use the sliding member, exhibiting both excellent friction characteristics and wear resistance in presence of lubricant such as lubricating oil or hydraulic oil.

The entire contents of Japanese Patent Application No. 2005-375579, filed December 27, 2005, are incorporated herein by reference.

Although the invention has been described above by reference to certain embodiments and examples of the invention, the invention is not limited to the embodiments and examples described above. Modifications and variations of the embodiments and examples described above will occur to those skilled in the art, in light of the above teachings. The scope of the invention is defined with reference to the following claims.

## Claims

1. A sliding member made of a resin composition, the resin composition comprising:
a matrix resin which is a thermoplastic resin having a number average molecular weight of not less than 20000; and
a fluororesin in an amount ranging from 5 to 40 % by mass based on a total amount of the resin composition, the fluororesin having a surface energy ranging from 200 to 400 µN/cm and a visible light transmittance of not less than 10% at a wavelength of 600 nm.

2. A sliding member as claimed in Claim 1, wherein the matrix resin is a thermoplastic resin having a number average molecular weight of not less than 25000.

3. A sliding member as claimed in Claim 1 or 2, wherein the fluororesin is contained in an amount ranging from 10 to 20 % by mass based on the total amount of the resin composition.

4. A sliding member as claimed in any of Claims 1 to 3, wherein the fluororesin is fluororesin particle having an average particle size ranging from 1 to 50 µm.

5. A sliding member as claimed in any of Claims 1 to 3, wherein the fluororesin is fluororesin particle having an average particle size ranging from 1 to 30 µm.

6. A sliding member as claimed in any of Claims 1 to 5, wherein the matrix resin is polyamide resin, and the fluororesin is tetrafluoroethylene resin.

7. A chain guide comprising:
a shoe material having a sliding section, the sliding section being provided with a sliding member for a chain system, used in the chain system and made of a resin composition, as claimed in Claim 1.

8. A chain tensioner comprising:
a shoe material having a sliding section, the sliding section being provided with a sliding member for a chain system, used in the chain system and made of a resin composition, as claimed in Claim 1.

9. A chain system comprising:
a sliding member for a chain system, used in the chain system and made of a resin composition, as claimed in Claim 1; and
a chain,
wherein the sliding member and the chain are in slidable contact with each other in presence of a lubricant.

10. A chain system as claimed in Claim 9, wherein a sliding surface of the chain has a surface roughness, at a maximum roughness, of not larger than 5 µm.

11. Use of a sliding member as claimed in Claim 1 for a chain system.

## Patentansprüche

1. Gleitelement aus einer Harzmischung, wobei die Harzmischung umfasst:
ein Matrixharz, das ein Thermoplastharz mit einem durchschnittlichen Molekulargewicht von nicht weniger als 20000 ist; und
ein Fluorharz in einer Menge von 5 bis 40 Masse% auf der Grundlage einer Gesamtmenge der Harzmischung, wobei das Fluorharz eine Oberflächenenergie von 200 bis 400 µN/cm und eine optische Durchlässigkeit für sichtbares Licht von nicht weniger als 10 % bei einer Wellenlänge von 600 nm aufweist.

2. Gleitelement nach Anspruch 1, wobei das Matrixharz ein Thermoplastharz mit einem durchschnittlichen Molekulargewicht von nicht weniger als 25000 ist.

3. Gleitelement nach Anspruch 1 oder 2, wobei das Fluorharz in einer Menge von 10 bis 20 Masse% auf der Grundlage der Gesamtmenge der Harzmischung enthalten ist.

4. Gleitelement nach einem der Ansprüche 1 bis 3, wobei das Fluorharz ein Fluorharzteilchen mit einer durchschnittlichen Teilchengröße von 1 bis 50 µm ist.

5. Gleitelement nach einem der Ansprüche 1 bis 3, wobei das Fluorharz ein Fluorharzteilchen mit einer durchschnittlichen Teilchengröße von 1 bis 30 µm ist.

6. Gleitelement nach einem der Ansprüche 1 bis 5, wobei das Matrixharz Polyamidharz ist und das Fluorharz Tetrafluorehtylenharz ist.

7. Kettenführung, umfassend:
ein Gleitstückmaterial mit einem Gleitabschnitt, wobei der Gleitabschnitt mit einem Gleitelement für ein Kettensystem versehen ist, das in dem Kettensystem verwendet wird und aus einer Harzmischung nach Anspruch 1 gefertigt ist.

8. Kettenspanner, umfassend:
ein Gleitstückmaterial mit einem Gleitabschnitt, wobei der Gleitabschnitt mit einem Gleitelement für ein Kettensystem versehen ist, das in dem Kettensystem verwendet wird und aus einer Harzmischung nach Anspruch 1 gefertigt ist.

9. Kettensystem, umfassend:
ein Gleitelement für ein Kettensystem, das in dem Kettensystem verwendet wird und aus einer Harzmischung nach Anspruch 1 gefertigt ist; und
eine Kette,
wobei das Gleitelement und die Kette, in Gegenwart eines Schmiermittels, in Gleitkontakt miteinander sind.

10. Kettensystem nach Anspruch 9, wobei eine Gleitoberfläche der Kette eine Oberflächenrauheit mit einer maximalen Rauheit von nicht größer als 5 µm aufweist.

11. Verwendung eines Gleitelements nach Anspruch 1 für ein Kettensystem.

## Revendications

1. Elément coulissant réalisé en une composition de résine, la composition de résine comprenant :
une résine matrice qui est une résine thermoplastique ayant une masse moléculaire moyenne en nombre d'au moins 20000 ; et
une fluororésine dans une quantité comprise entre 5 et 40% en masse, basée sur une quantité totale de la composition de résine, la fluororésine ayant une énergie de surface comprise entre 200 et 400 µM/cm et un facteur de transmission de la lumière visible d'au moins 10% à une longueur d'onde de 600 nm.

2. Elément coulissant selon la revendication 1, dans lequel la résine matrice est une résine thermoplastique ayant une masse moléculaire moyenne en nombre d'au moins 25 000.

3. Elément coulissant selon les revendications 1 ou 2, dans lequel la fluororésine est contenue dans une quantité comprise entre 10 et 20% en masse, sur la base de la quantité totale de la composition de résine.

4. Elément coulissant selon l'une quelconque des revendications 1 à 3, dans lequel la fluororésine est une particule de fluororésine ayant une taille moyenne de particule comprise entre 1 et 50 µm.

5. Elément coulissant selon l'une quelconque des revendications 1 à 3, dans lequel la fluororésine est une particule de fluororésine ayant une taille moyenne de particules comprise entre 1 et 30 µm.

6. Elément coulissant selon l'une quelconque des revendications 1 à 5, dans lequel la résine matrice est une résine de polyamide, et la fluororésine est une résine de tétrafluoroéthylène.

7. Guide de chaîne comprenant :
un matériel de semelle ayant une section coulissante, la section coulissante étant dotée d'un élément coulissant pour un système de chaîne, utilisé dans le système de chaîne et constitué d'une composition de résine, selon la revendication 1.

8. Tendeur de chaîne comprenant :
un matériel de semelle ayant une section coulissante, la section coulissante étant dotée d'un élément coulissant pour un système de chaîne, utilisé dans le système de chaîne et constitué d'une composition de résine, selon la revendication 1.

9. Système de chaîne comprenant :
un élément coulissant pour un système de chaîne, utilisé dans le système de chaîne et constitué d'une composition de résine, selon la revendication 1, et
une chaîne,
dans lequel l'élément coulissante et la chaîne sont en contact coulissant l'un avec l'autre en présence d'un lubrifiant ;

10. Système de chaîne selon la revendication 9, dans lequel une surface coulissante de la chaîne a une rugosité de surface, à une rugosité maximale, d'au plus 5 µm.

11. Utilisation d'un élément coulissant selon la revendication 1 pour un système de chaîne.
